# EUROPEAN PATENT SPECIFICATION

(11) **EP 0 958 969 B1**
(45) Date of publication and mention of the grant of the patent: **27.08.2003**
(21) Application number: 99303714.2
(22) Date of filing: 12.05.1999
(51) Int. Cl.: B60R 19/52, B60R 19/20, B60R 19/03

(54) **Vehicle protection bars**
Fahrzeugschutzbügel
Barre de protection d'un véhicule

(30) Priority: 16.05.1998 GB 9810470
(43) Date of publication of application: 24.11.1999
(73) Proprietor: Concept Mouldings Limited, Wolverhampton, West Midlands WV2 2HX (GB)
(72) Inventor: Finney, Ian Antony, Wolverhampton, West Midlands WV2 2HX (GB); Malpass, Steven Terrence, Wolverhampton, West Midlands WV2 2HX (GB)
(74) Representative: Swindell & Pearson

(56) References cited:
- GB-A- 2 087 299
- GB-A- 2 213 156
- GB-A- 2 316 371
- GB-A- 2 327 912
- US-A- 4 333 674
- DATABASE WPI Derwent Publications Ltd., London, GB; AN 96-354930 XP002113910 & AU 40444 95 A (RETALLICK)

## Description

This invention is concerned with improvements in or relating to the provision of protection bars on the front of land vehicles.

In different parts of the world, such protection bars as the invention relates to are known as roo bars, nudge bars and bull bars. The bars are arranged for the protection of both the vehicle body, in the event of a frontal impact with an animal or person, and also to minimise injury to that animal or person.

In their most basic form, protection bars can be constructed as a self-supporting framework of metal sections (e.g. round tube) which is secured to the vehicle front. To minimise personal injury which can be caused by such a rigid framework, the framework can be covered by a cushioning material such as a resilient polyurethane material.

Such protection bars based on a metal framework are heavy and expensive to manufacture.

For lighter duties, it is known to replace the metal framework with a vacuum-formed plastics section, being of a thermo-formed material. This section is then encased or encapsulated in a polyurethane material to give an improved finish to the product. However, whilst lighter and cheaper to manufacture, such vacuum-formed sections are liable to twist and flex in certain directions and it is, therefore, necessary to have many fixing points in securing the product to a vehicle. In AU-4044495 a bull-bar frame is described which is formed as one-piece component through a rotational moulding process. There is no teaching in AU-4044495 to specific configuration of the frame for reduced impact injury. Document US-A-4333674 shows a vehicle bumper unit according to the state of the art.

The invention provides a protection bar unit for securement to the front of a land vehicle and comprising a frame which has at least one formation which comprises a region of reduced material thickness, the frame comprises at least one limb having a wall or walls defining a space therein, the wall on the limb having a material thickness which is locally reduced to define the at least one formation, the at least one limb comprises a rear face which, in use faces the vehicle and a front face which, in use, provides the likely first point of contact and also includes the at least one formation, the front face being curved and incorporating the region of reduced material thickness upon an upper part of that curved face, the curved face generally being thinner than the rear face.

Preferably the formation causes the frame to collapse from the vicinity of the point of impact.

The rear face may be substantially flat. The rear face may be swaged along at least part of its length. The swage may be used to accommodate additional equipment, such as an airbag.

The frame may comprise at least one hollow limb which houses a reinforcing member. The reinforcing member may be a metal member, such as a rod, tube or box section.

The formation may also include a notch formed in a member of the frame. This creates a hinge point for the protection bar to rotate away from a pedestrian or object and absorb energy prior to the pedestrian or object hitting the front of the vehicle and/or the leading edge of the bonnet.

The frame is preferably moulded of polyethylene, polypropylene or nylon, and is preferably of medium or high density. The frame may be encased in a body of cushioning material. The cushioning material may be of a suitable plastics material, such as polyurethane. The cushioning material may be moulded in integral skin form. Alternatively, the cushioning material may be an unblown material, such as a solid polyurethane elastomer, and/or a reaction injection moulded (R.I.M.) system. The cushioning material may be self-coloured and/or post-coloured and/or post-painted and/or textured for aesthetic effect.

Preferably the frame is hollow and may be filled with energy absorbing foam material, such as a low density rigid polyurethane. Glass reinforcement may be incorporated in the unit and the frame may encapsulate fixings to allow securement as aforesaid.

Embodiments of the present invention will now be described in more detail, by way of example only, and with reference to the accompanying drawings, in which:
Fig. 1 is a schematic perspective view of a protection bar unit.
Figs. 2 and 3 are sections through the unit of Fig. 1, respectively along the lines 2-2, 3-3 shown in Fig. 1;
Figs. 4 and 5 correspond to Figs. 2 and 3 and show a further unit
Figs. 6 and 7 also correspond to Figs. 2 and 3 and show a further unit,
Fig. 8 is a schematic version of a further unit shown partly cut away;
Figs. 9 and 9a show a further unit in perspective and in section along the line 9a-9a;
Figs. 10 and 10a correspond with Figs. 9 and 9a, showing an embodiment;
Figs. 11a to d illustrate one limb of the embodiment of Fig. 10 during impact;
Figs. 12 and 12a and Figs. 13 and 13a correspond with Figs. 9 and 9a, showing two further embodiments; and
Figs. 14a and 14b are sections illustrating additional reinforcement.

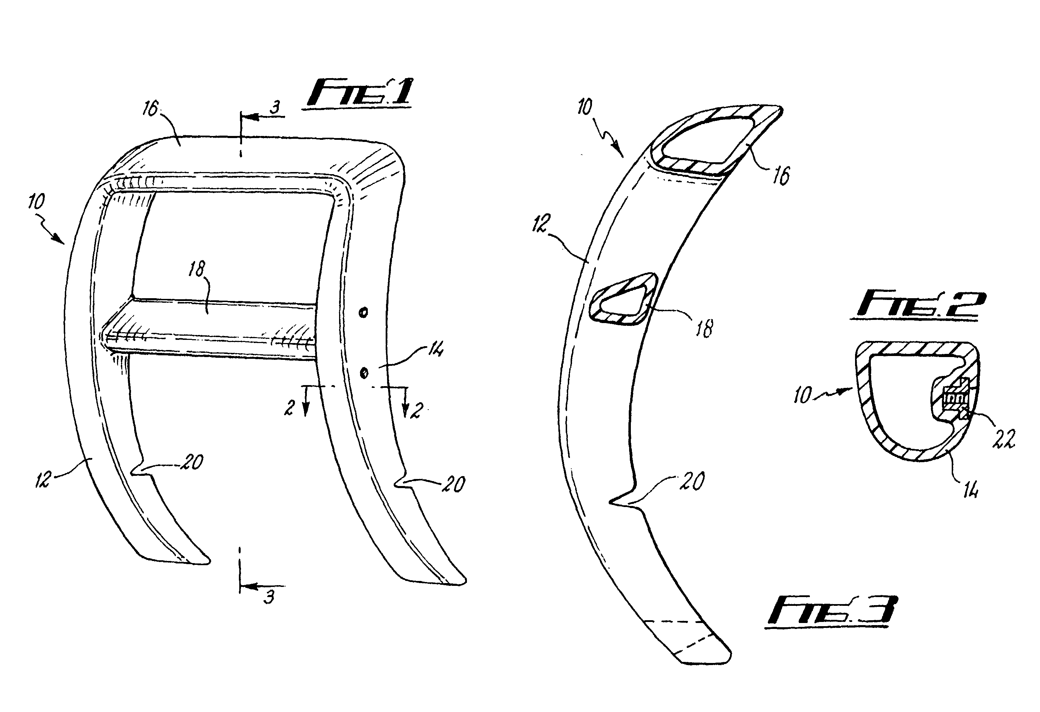

Fig. 1 shows a protection bar unit 10 for attachment to the front of a vehicle. The unit 10 comprises two bowed upright arms 12,14 which are interconnected at the top by means of an upper cross piece 16 and at a lower position by means of a lower cross piece 18. Approximately two thirds of the lengths of the arms 12,14 extend below the lower cross piece 18.

The unit 10 is a rotational moulding. The members of the unit are generally inflexible but the lower lengths of each arm 12,14 are provided with at least one notch formation 20 which defines a point of relative weakness across the arm 12,14. Under impact, this allows rotation to occur around the notched area of the upper portion of the member arm 12,14, enabling it to deform back in a folding manner. This enhances safety during a collision and also assists in absorbing some of the energy of the impact.

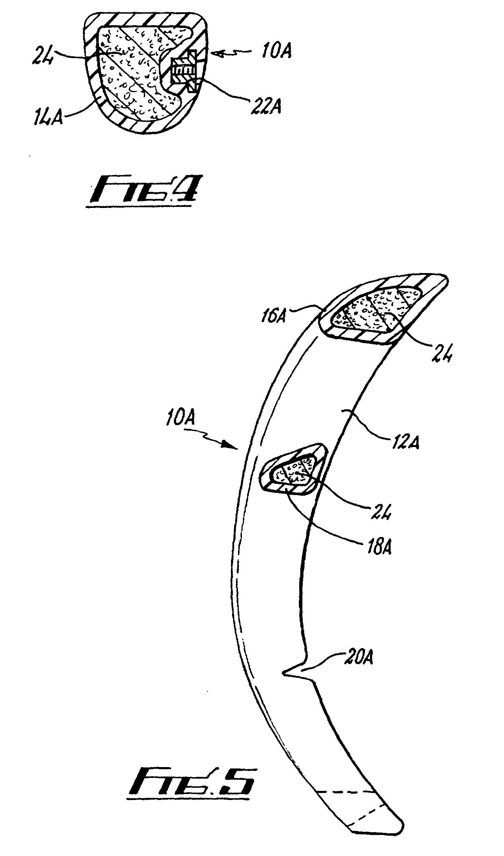

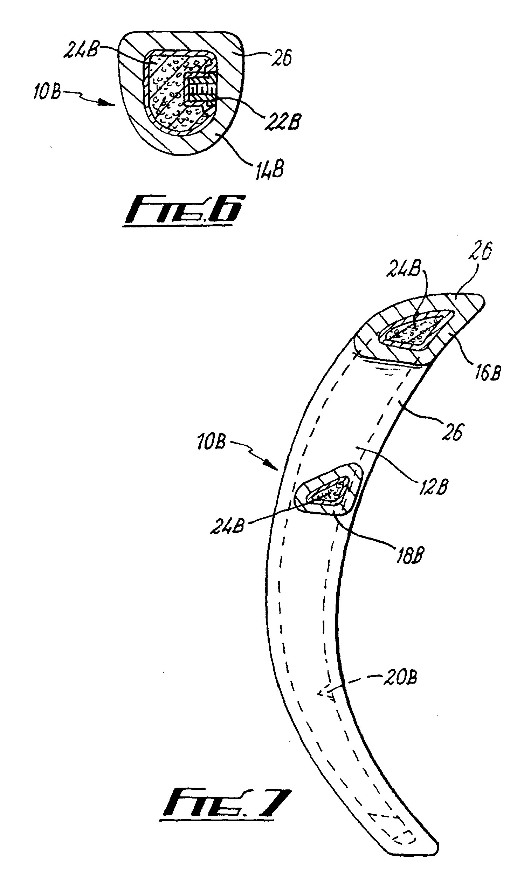

The limbs 12,14,16,18 of the rotationally moulded unit 10 are each generally stiff and inflexible (except in the region of the notches 20), being moulded as a hollow section as can be seen from Figs. 2 and 3. The unit 10 is preferably rotationally moulded in one piece of a suitable grade of polyethylene, polypropylene or nylon, preferably of medium or high density.

Securement of the unit to a vehicle is facilitated by inserts 22 (Fig. 2) encased or encapsulated in the material of the rotational moulding, and threaded to receive fixing bolts or otherwise cooperate with fixing mechanisms. In this example, four inserts 22 are provided in the arms 12,14, in the region of the lower cross piece 18, but inserts could be provided at different positions and in different numbers.

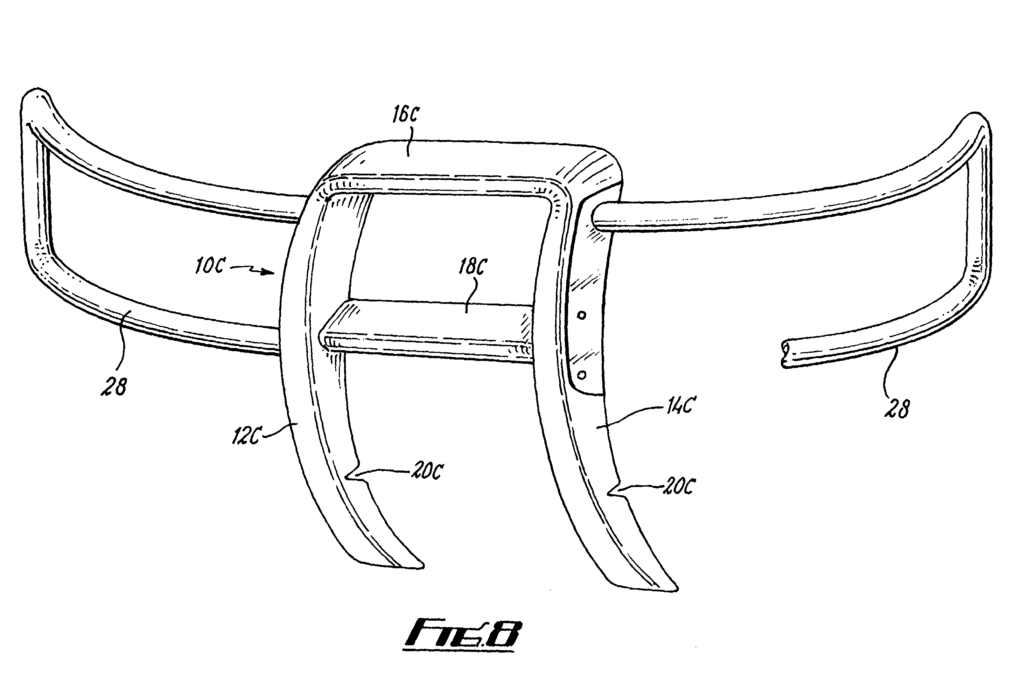

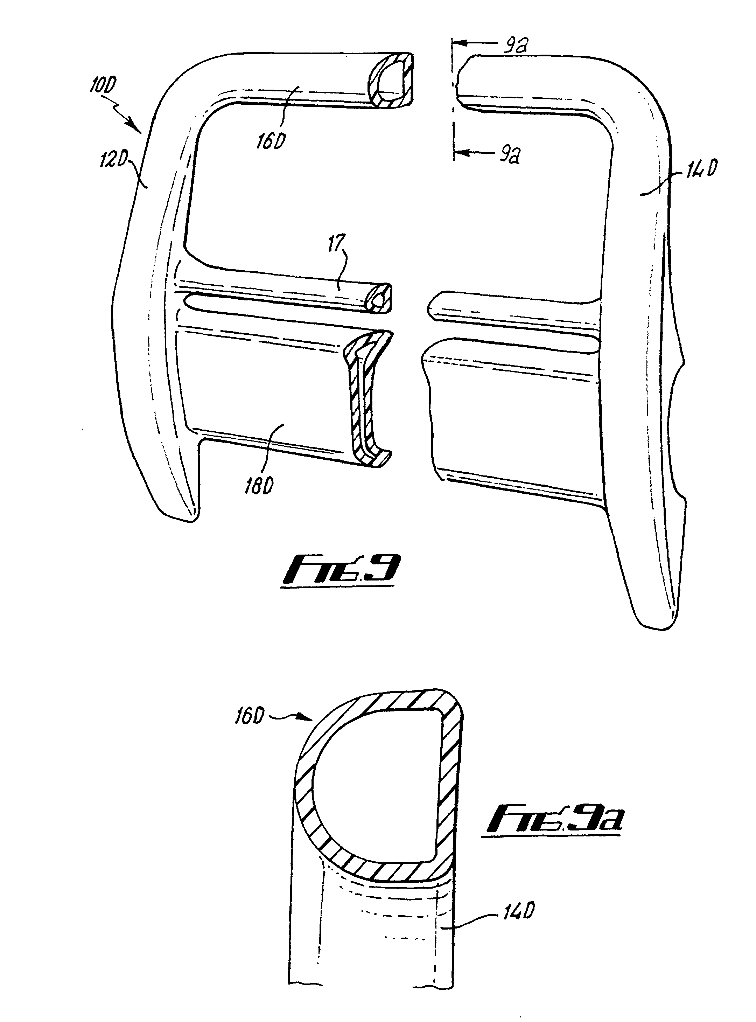

Figs. 4 and 5 show a variation of the unit 10, with like features being indicated by like numerals suffixed "A". The unit 10A is a hollow rotationally-moulded frame as described above in relation to Figs. 1 to 3 and of similar shape, but which is filled, after moulding, with a low density rigid foam 24, suitably of polyurethane. The foam 24 further enhances the function of the unit 10A by providing energy absorbing properties. Glass fibres on other reinforcing material may be incorporated in the foam 24.

If the frame is rotationally moulded from a blown material, thinner sections of the unit may tend towards being filled by the blown material, but the unit can, with advantage, be moulded to produce hollow sections substantially throughout.

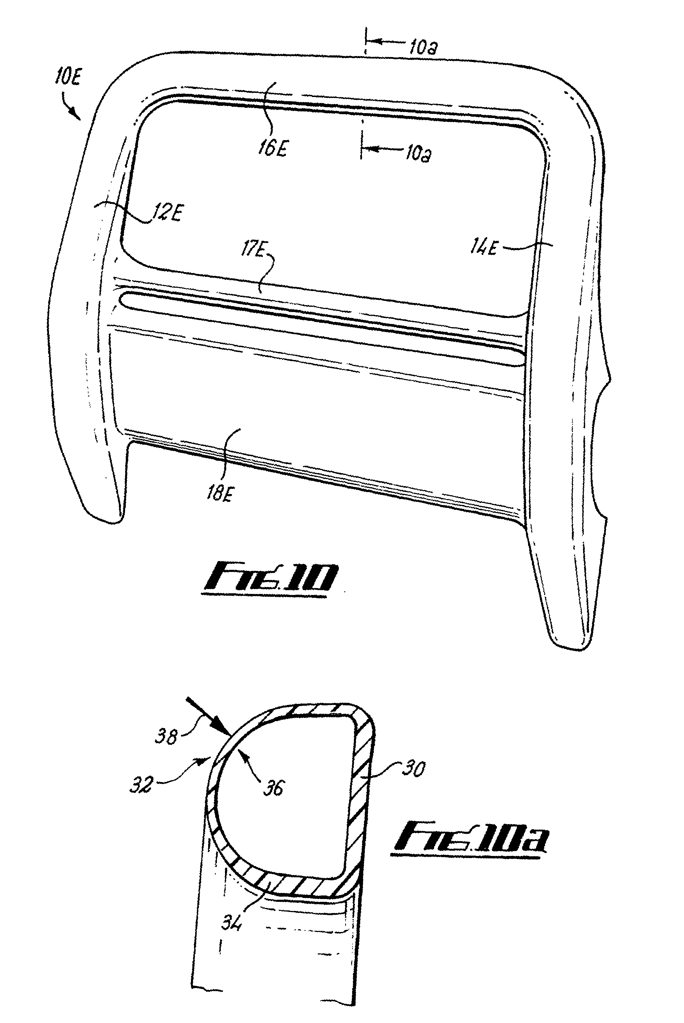

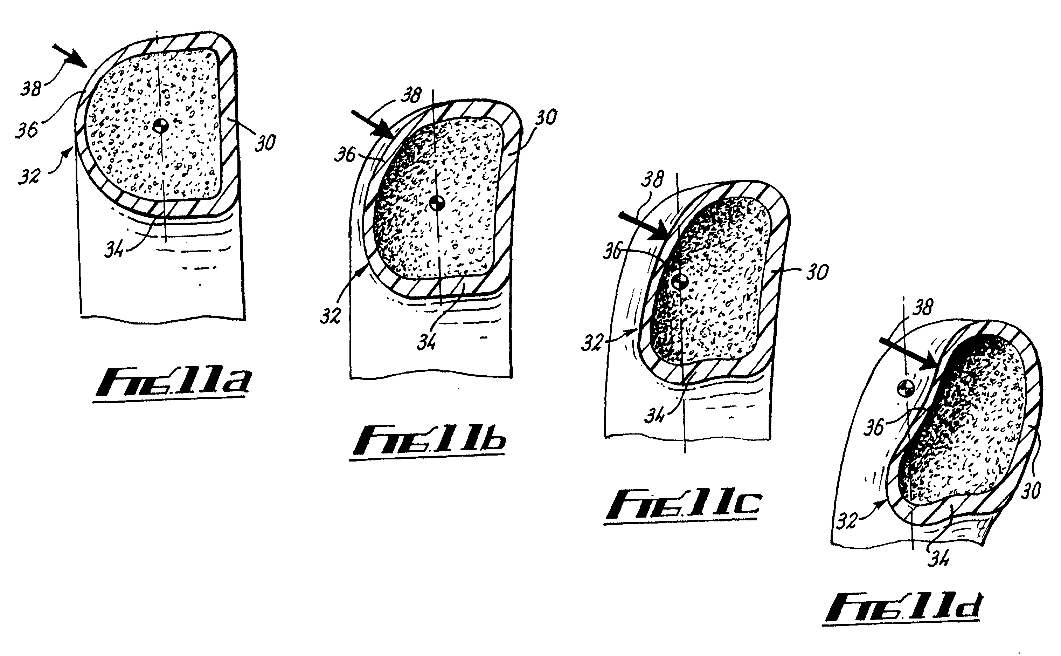

An alternative unit is shown in Figs. 6 and 7. Again, like numerals are used to assist in comparison with the unit of Figs. 1 to 3, with the suffix "B". The unit 10B is formed from a unit (or "armature") like the armature described above in relation to Figs. 1 to 3, formed by rotational moulding as described. This is optionally filled with energy absorbing foam 24B as described in relation to Figs. 4 and 5. An outer cushioning body 26 is then formed around the armature to encase it. The cushioning body 26 may be an integral skin moulded material, such as a polyurethane. Alternatively, the cushioning body 26 may be formed from a PUR R.I.M./elastomer polyurethane system. This system is an unblown system which provides an outer surface which is more easily painted than an integral skin outer body. This allows the aesthetics of the final product to be improved, for instance by colouring the body 26 with the same paint used on the vehicle for which the unit 10B is intended, thus ensuring a precise colour match.

Alternatively, the outer surface of the unit 10,10A,10B (whether that be the rotational moulding or the cushioning body) could be self-coloured for enhanced aesthetic effect.

Surface texture could be formed on the outer surface of the final product, to further enhance the aesthetic appeal of the product. In particular, a cushioning body 26 of R.I.M. material is readily textured, while remaining paintable.

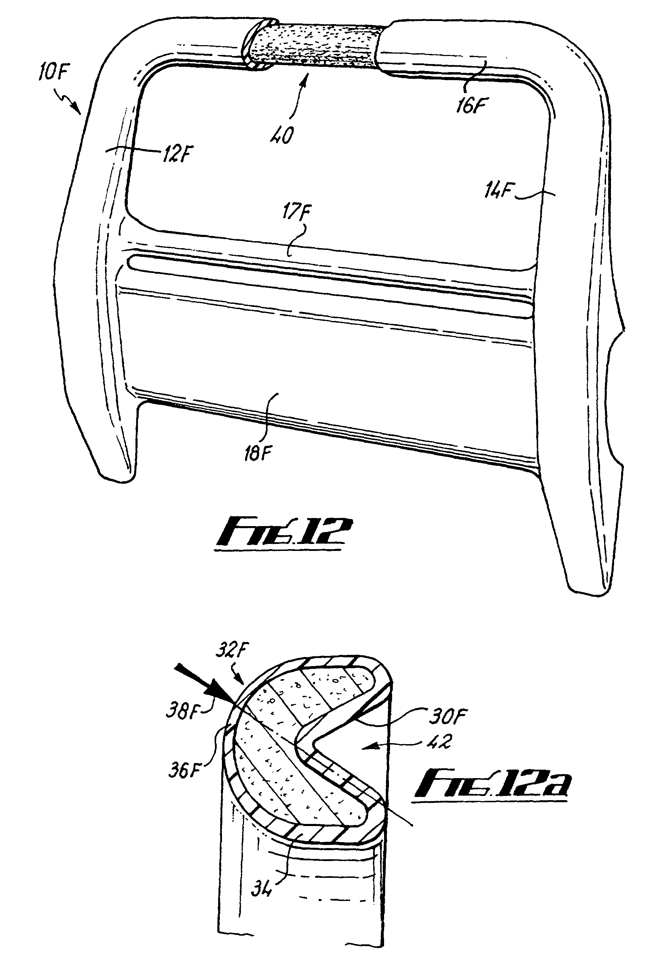

Fig. 8 shows a further example (with numerals suffixed "C") in which additional hoops 28 are provided, one of which is shown partly cut away. These hoops 28 can be formed as part of the rotational moulding and can be covered and/or filled in any of the ways or combinations described above. The hoop 28 may be present for aesthetic reasons or to improve the protection provided by the unit, or both.

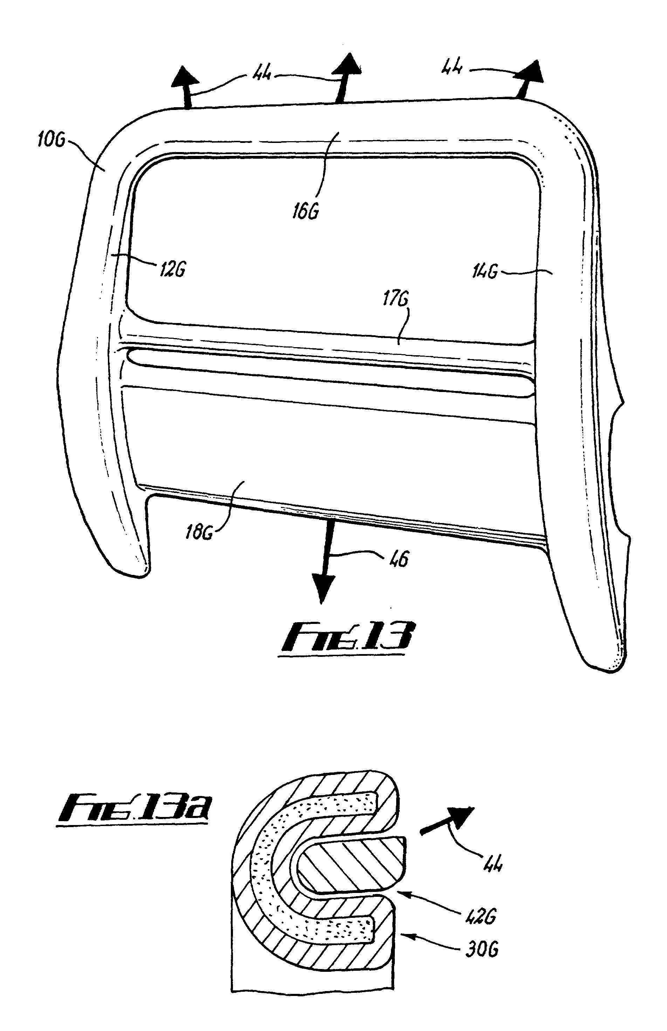

Fig. 9 shows a further example of a protection bar unit 10D for attachment to the front of a vehicle. Again, like numerals are used to assist in comparison with the units of Figs. 1 to 8, with the suffix "D". The unit 10D has two upright arms 12D,14D which are interconnected at the top by means of an upper cross piece 16D, and at lower positions by a relatively narrow cross piece 17, and a wider beam 18D. Most of the length of the arms 12D,14D extends above the beam 18D.

The unit 10D is shown partially cut away at a vertical plane, to reveal the cross-section of the limbs of the unit, which is a rotational moulding. The cross-section of the upper cross piece 16D is shown in Fig. 9a, from which it can be seen that the cross piece 16D is hollow and "D" shaped, with substantially uniform wall thickness around its periphery. The cross piece 16D is shown without any filling in its hollow interior, and without any cushioning layer around the rotational moulding, but either of these could optionally be used, as has been described in relation to other embodiments.

The unit 10D does not have any formations defining points of relative weakness, being generally stiff and inflexible throughout.

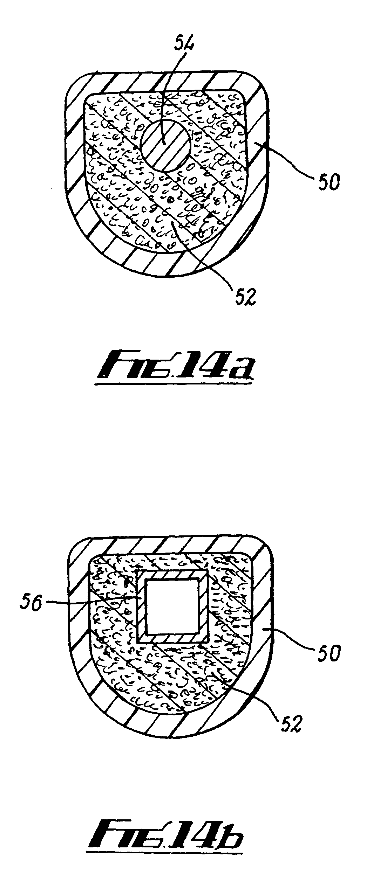

Fig. 10 shows a unit according to the invention 10E, for which numerals suffixed "E" are used. The appearance of the unit 10E corresponds closely with the appearance of the unit 10D.

Fig. 10a shows a section of the cross piece 16E, corresponding with the section in Fig. 9a. It can be seen from Fig. 10a that the wall thickness of the cross piece 16E is not constant around its periphery. The rear face 30 is relatively thick, and will, in use, face the vehicle on which the unit 10E is mounted. The curved front face 32 which, in use, faces away from the vehicle, has a relatively thick wall in its lower regions indicated generally at 34, and a thinner region towards its top, generally at 36. This formation of reduced material thickness defines a region of relative weakness in the cross piece 16E, as will be described below, with reference to Figs. 11A to 11D. The thinner region 36 is positioned at the likely first point of impact during a road accident, indicated by the arrow 38. In particular, a head impact against the unit 10E is likely to be in the region indicated by the arrow 38, and at approximately the angle of impact indicated by the arrow 38.

In common with embodiments previously described, the unit 10E is a rotational moulding which may optionally be filled with filling as described above, and optionally covered with covering as described above.

Figs. 11a to 11d illustrate the behaviour of the cross piece 16E under impact such as a head impact. In particular, this is the performance expected under an impact of the type assumed in standard tests, which are known within the automotive industry for assessment of head impact, such as the head of a child (the so-called Head Impact Criteria (HIC) tests).

Fig. 11a illustrates an impact 38 against the cross piece 16E in the thinner region 36, where the cross piece 16E is relatively weak. That is to say, the rear face 30 is less readily deformed by virtue of its increased material thickness, as is the lower region 34. Consequently, the impact 38 causes the cross piece 16E to begin deforming from the region 36, back towards the face 30, thus collapsing steadily from the front toward the rear, absorbing significant amounts of energy as it does so. The cross piece 16E shown in Figs. 11a to 11d is filled with filler material, which will naturally affect the energy-absorbing characteristics. However, it has been found that by providing an arrangement which collapses from the front in this manner, good HIC characteristics can be achieved, in that the head is slowed sufficiently to avoid impact with the vehicle carrying the unit 10E, but energy is absorbed over a sufficient distance to avoid severe deceleration, which is undesirable as being a cause of brain damage. The precise characteristics achieved will naturally depend on dimensions, choice of materials and the like, and on the nature or absence of any filler or covering. However, it is envisaged that a unit which collapses from the front toward the back, as described above, can be tailored by adjustment of these parameters, to achieve good HIC results.

It can be seen from Figs. 11a to 11d that the rear face 30 is almost unaffected at least until the deformation has reached the point of Fig. 11c, at which point the front face 32 has considerably deformed from its original condition in Fig. 11a, so that substantial energy will already have been absorbed. The relative strength of the rear face 30, arising from its increased material thickness, will cause the deceleration thereafter to increase, as the rear face 30 begins to deform (Fig. lid), but it is expected that by this stage of the impact, the head will have slowed considerably, so that this additional resistance is tolerable within the HIC tests.

It can therefore be understood that the unit 10E can provide a solution to the problem of HIC compliance for road vehicles, without the vehicles themselves requiring modification other than the fitting of a unit according to the invention. A conventional non-compliant vehicle can be fitted with a unit 10E to provide HIC compliance within the unit 10E, which prevents the head making impact with the vehicle itself.

The thickness of the rear face 30 provides adequate strength to the arrangement to resist damage during normal use, for instance by a user leaning on the cross piece 16E when the vehicle is stationary, and also resists deflection of the unit while the front face is collapsing.

The response of the unit 10E has been described in relation to the cross piece 16E, but it will be realised that by making other limbs of the unit 10E with appropriate cross-sections and wall thicknesses, equivalent impact performance can be provided elsewhere in the unit 10E, as required.

Fig. 12 shows a further example of a unit 10F, with numerals suffixed "F". Again, the unit 10F is a rotational moulding. In this case, the moulding is illustrated filled with energy absorbing foam, visible in a broken away portion 40 and in the cross-section Fig. 12a, but which is optional. A cushioning layer around the profile is also optional, as has been described above.

The profile of the cross piece 16F is more complex than those described previously. In particular, the rear face 30F is no longer flat, but is swaged at 42 to provide a V-shaped channel running along the cross piece 16F. (The term "swaged" is used by analogy with the term from the metal forming art, in view of the similarity of the depression so formed, but it will be apparent that the depression arises from the rotational moulding, rather than by subsequent deforming of material of the cross piece 16F). The rear face 30 has relatively thick walls, for strength, the strength being further improved by the swage 42. Fig. 12a illustrates that the alignment of the lower wall of the swage 42 is generally in line with the direction of impact from the first point of impact, illustrated by the arrow 38F. This assists the rear face 30 in resisting the initial impact, so that the front face 32F will again collapse from the point of first impact in the thinner region 36F, as has been described above in relation to Fig. 11a to 11d.

Fig. 13 shows a further example of a protection bar unit 10G of similar appearance to those of Figs. 9 to 12 and with numerals suffixed "G". In this example, the cross piece 16G has the profile shown in Fig. 13a which, as can be seen, is generally C-shaped. In effect, the rear face 30G is formed with a more severe swage 42G in the form of a U-shaped channel. Again, the unit 10G is a rotational moulding which may optionally be filled with energy absorbing foam (as shown in Fig. 13a), and may optionally be covered with a cushioning material (not shown in Fig. 13a). The swage 42G may be sufficiently deep to accommodate other equipment, such as an airbag deployable on impact in the direction of the arrow 44 to cover the bonnet of the vehicle on which the unit 10G is fitted , thereby further improving safety. The beam 18D can similarly be provided with a deep swage at its rear, allowing an additional airbag to deploy in the direction of the arrow 46, blocking any gap between the ground and the vehicle, preventing a pedestrian falling under the vehicle.

The deep swage 42G can be sufficient to weaken the cross piece 16G to an extent that under impact, the upper and lower limbs of the cross piece 16G will tend to fold together, closing the swage 42 as the cross piece 16G collapses from the front to the back.

Figs. 14a and 14b illustrate possible further reinforcement to be provided within hollow sections of any of the embodiments described above. In Fig. 14a, a rotational moulded profile 50 is filled with energy absorbing foam 52, which surrounds a round or oval metal bar 54 which runs along the profile 50. In Fig. 14b, the reinforcement is a hollow, square-section metal member 56. The reinforcement may be metal or other strong material, in the form of rod, tube, box or other section. The purpose of the reinforcement 54,56 is to further strengthen the protection bar units. The reinforcement may be used selectively in some of the limbs of the units. In particular, the upright arms 12 etc., 14 etc. are preferably reinforced in this way, while the cross pieces, particularly the upper cross piece 16 etc., are not so strengthened. As a result, the performance of the cross pieces can remain as described above (particularly in relation to Figs. 11a to lid), but the additional strength of the uprights reduces any deflection of the uprights, thus further reducing the risk of the vehicle bonnet becoming involved in the collision until the unit has absorbed energy in line with the HIC criteria. In the examples of Figs. 9 to 13, it is envisaged that metal strengthening members would extend up the uprights 12,14, approximately to the height of the cross piece 17, with the unit 10 being without metal reinforcement above that point. In addition to assisting with the HIC criteria, additional strengthening at these points can assist in meeting thigh impact criteria used within the automotive industry. Naturally, thigh impacts are likely to take place at lower positions than head impacts, and require stronger units.

It can thus be seen that the invention provides a rotational moulded armature which can be used alone or with optional filling or optional covering. Suitable materials for the rotationally moulded component may include high or medium density polyethylene, nylon (e.g. 6, 6.6, 11 or 12) and polypropylene. The outer cushioning, if used, may be of any suitable plastics material, e.g. polyurethane in integral skin, R.I.M. or elastomer skin form. The overall shape of the finished product can be varied according to the design of vehicle with which the product is intended to be used, and for aesthetic effect. The swaging shown in Figs. 12 and 13 will strengthen the unit, allowing performance to be achieved with a slimmer profile, which aids the aesthetic effect.

## Claims

1. A protection bar unit for securement to the front of a land vehicle and comprising a frame (10) which has at least one formation which comprises a region of reduced material thickness (36), the frame comprises at least one limb (16) having a wall or walls (30,32,34,36) defining a closed space therein, the wall on the limb having a material thickness which is locally reduced to define the at least one formation (36), the at least one limb (16E) comprises a rear face (30) which, in use faces the vehicle and a front face (32) which, in use, provides the likely first point of contact and also includes the at least one formation (36), the front face being curved and incorporating the region of reduced material thickness upon an upper part of that curved face, the curved face (36) generally being thinner than the rear face (30).

2. A unit according to claim 1, wherein the formation (36) causes the frame (10) to collapse from the vicinity of the point of contact.

3. A unit as claimed in claim 1 or 2 wherein the rear face (30) is sustantially flat.

4. A unit as claimed in any of claims 1, 2 or 3 wherein the rear face (30) is swaged along at least part of its length.

5. A unit as claimed in claim 4 wherein the swage accommodates additional equipment.

6. A unit according to claim 5, wherein the additional equipment is an airbag.

7. A unit according to any preceding claim, wherein the frame (10) comprises at least one hollow limb (50) which houses a reinforcing member (54,56).

8. A unit as claimed in claim 7 wherein the reinforcing member is a metal member.

9. A unit according to any preceding claim wherein the frame is encased is a body of cushioning material (52).

10. A unit according to any preceding claim in which the formation also includes a notch (20) formed in a member of the frame.

11. A unit according to any preceding claim, wherein the frame is hollow and filled with energy absorbing foam material (24).

## Patentansprüche

1. Schutzstangeneinheit zur Befestigung am Vorderteil eines Geländefahrzeugs und mit einem Rahmen (10), der mindestens eine Formation hat, die einen Bereich verringerter Materialdicke (36) aufweist, wobei der Rahmen mindestens ein Glied (16) mit einer Wand oder Wänden (30, 32, 34, 36) aufweist, welche einen geschlossenen Raum darin bestimmt bzw. bestimmen, wobei die Wand an dem Glied eine Materialdicke hat, die örtlich verringert ist, um die mindestens eine Formation (36) zu bestimmen, wobei das mindestens eine Glied (16E) eine Rückfläche (30) aufweist, die im Betrieb zu dem Fahrzeug weist, und eine Vorderfläche (32) aufweist, die im Betrieb den wahrscheinlichen ersten Berührungspunkt bildet und auch die mindestens eine Formation (36) enthält, wobei die Vorderfläche gekrümmt ist und den Bereich verringerter Materialdicke auf einem oberen Teil der gekrümmten Fläche enthält, wobei die gekrümmte Fläche (36) im allgemeinen dünner als die Rückfläche (30) ist.

2. Einheit nach Anspruch 1, **dadurch gekennzeichnet, dass** die Formation (36) ein Kollabieren des Rahmens (10) von der Umgebung des Berührungspunktes bewirkt.

3. Einheit nach Anspruch 1 oder 2, **dadurch gekennzeichnet, dass** die Rückfläche (30) im wesentlichen flach ist.

4. Einheit nach einem der Ansprüche 1, 2 oder 3, **dadurch gekennzeichnet, dass** die Rückfläche (30) entlang mindestens eines Teils ihrer Länge tiefgezogen bzw. im Gesenk geschmiedet ist.

5. Einheit nach Anspruch 4, **dadurch gekennzeichnet, dass** der tiefgezogene bzw. im Gesenk geschmiedete Bereich ein zusätzliches Element enthält.

6. Einheit nach Anspruch 5, **dadurch gekennzeichnet, dass** das zusätzliche Element ein Luftsack bzw. Airbag ist.

7. Einheit nach einem der vorhergehenden Ansprüche, **dadurch gekennzeichnet, dass** der Rahmen (10) mindestens ein hohles Glied (50) aufweist, in welchem ein Verstärkungselement (44, 46) untergebracht ist.

8. Einheit nach Anspruch 7, **dadurch gekennzeichnet, dass** das Verstärkungselement ein Metallelement ist.

9. Einheit nach einem der vorhergehenden Ansprüche, **dadurch gekennzeichnet, dass** der Rahmen in einem Körper aus Polstermaterial (42) eingeschlossen ist.

10. Einheit nach einem der vorhergehenden Ansprüche, **dadurch gekennzeichnet, dass** die Formation auch eine Einkerbung (20) enthält, die in einem Element des Rahmens ausgebildet ist.

11. Einheit nach einem der vorhergehenden Ansprüche, **dadurch gekennzeichnet, dass** der Rahmen rund ist und mit einem energieabsorbierenden Schaummaterial (24) gefüllt ist.

## Revendications

1. Unité de barre de protection destinée à être fixée à l'avant d'un véhicule terrestre et comprenant un cadre (10) qui présente au moins une formation qui comprend une région ayant une épaisseur de matériau réduite (36), le cadre comprenant au moins une branche (16) ayant une paroi ou des parois (30, 32, 34, 36) définissant un espace fermé à l'intérieur, la paroi de la branche ayant une épaisseur de matériau qui est localement réduite afin de définir la au moins une formation (36), la au moins une branche (16E) comprenant une face arrière (30) qui, lors de l'utilisation, fait face au véhicule et une face avant (32) qui, lors de l'utilisation, fournit le premier point de contact éventuel et comporte également la au moins une formation (36), la face avant étant incurvée et intégrant la région ayant une épaisseur de matériau réduite sur une partie supérieure de cette face incurvée, la face incurvée (36) étant globalement plus mince que la face arrière (30).

2. Unité selon la revendication 1, dans laquelle la formation (36) provoque l'écrasement du cadre (10) à partir de la zone proche du point de contact.

3. Unité selon la revendication 1 ou 2, dans laquelle la face arrière (30) est sensiblement plate.

4. Unité selon la revendication 1, 2 ou 3, dans laquelle la face arrière (30) est emboutie sur au moins une partie de sa longueur.

5. Unité selon la revendication 4, dans laquelle la partie emboutie accueille un équipement supplémentaire.

6. Unité selon la revendication 5, dans laquelle l'équipement supplémentaire est un coussin de sécurité gonflable.

7. Unité selon l'une quelconque des revendications précédentes, dans laquelle le cadre (10) comprend au moins une branche creuse (50) qui renferme un élément de renforcement (54, 56).

8. Unité selon la revendication 7, dans laquelle l'élément de renforcement est un élément en métal.

9. Unité selon l'une quelconque des revendications précédentes, dans laquelle le cadre est enrobé dans un corps de matériau amortissant (52).

10. Unité selon l'une quelconque des revendications précédentes, dans laquelle la formation comporte également une encoche (20) formée dans un élément du cadre.

11. Unité selon l'une quelconque des revendications précédentes, dans laquelle le cadre est creux et rempli de matériau en mousse absorbant l'énergie (24).
